# EUROPÄISCHE PATENTSCHRIFT

(11) **EP 2 083 493 B1**
(45) Veröffentlichungstag und Bekanntmachung des Hinweises auf die Patenterteilung: **08.12.2010**
(21) Anmeldenummer: 08100946.6
(22) Anmeldetag: 25.01.2008
(51) Int. Cl.: H02H 3/00, H02H 6/00, H02H 7/08

(54) **Überlastrelais und Verfahren zum Betreiben eines solchen Überlastrelais**
Overload relay and method for operating such an overload relay
Relais de surcharge et procédé de fonctionnement d'un tel relais de surcharge

(43) Veröffentlichungstag der Anmeldung: 29.07.2009
(73) Patentinhaber: SIEMENS AKTIENGESELLSCHAFT, 80333 München (DE)
(72) Erfinder: Behringer, Klaus, 91338, Igensdorf (DE); Gruber, Stefan, 92245, Kümmersbruck (DE); Kurbjuweit, Thomas, 92224, Amberg (DE); Weiss, Uwe, 92224, Amberg (DE)

(56) Entgegenhaltungen:
- EP-A- 0 237 412
- US-A- 5 057 962
- US-B1- 6 459 557

## Beschreibung

Die Erfindung betrifft ein dreikanaliges Überlastrelais zum Schutz einer bis zu dreiphasigen Last.

Bekannte Überlastrelais sind ausschließlich zum Schutz von dreiphasigen Lasten, wie beispielsweise Drehstrommotoren geeignet. Soll nun eine einphasige Last, beispielsweise ein Wechselstrommotor, mit einem solchen Überlastrelais geschützt werden, so ist dies nicht ohne weiteres möglich.

Ein Überlastrelais befindet sich zwischen einem Versorgungsnetz und einer Last. Seine drei Kanäle sind im Betrieb an einer dreiphasigen Last mit jeweils einer von dem Versorgungsnetz zur der Last führenden Phase belegt. Wird das Überlastrelais an einer einphasigen Last, wie beispielsweise einem Wechselstrommotor, betrieben, so sind ein oder zwei Kanäle mit einer Phase belegt, die übrigen Kanäle laufen leer.

Soll nun ein dreikanaliges Überlastrelais an einer einphasigen Last betrieben werden, so kann dieses speziell verdrahtet werden. Die Phase wird dabei durch die einzelnen Kanäle des dreiphasigen Überlastrelais "durchgeschleift", was einen erheblichen Verdrahtungsaufwand darstellt. Bei einem höherwertigen, programmierbaren Überlastrelais, kann dessen Software umprogrammiert werden. Im Rahmen einer solchen Softwareparametrierung werden beispielsweise zwei der drei Kanäle abgeschaltet und die Auslöse- bzw. Schwellwerte mit passend gewählten Korrekturfaktoren versehen. Nach der Softwareparametrierung ist ein solches Überlastrelais fest auf den Betrieb an einer einphasigen Last eingestellt.

Sowohl eine besondere Verdrahtung eines Überlastrelais als auch dessen Umprogrammierung stellen für den Anwender einen erheblichen Aufwand dar. Soll nach dem Betrieb an der einphasigen Last das entsprechende Überlastrelais wiederum für eine dreiphasige Last verwendet werden, so fällt der entsprechende Verdrahtungs- bzw. Programmieraufwand erneut an.

Ein Überlastrelais geeignet für ein - oder dreiphasige Lasten ist in US 6 459 557 gezeigt. Dieses Relais erfordert jedoch die richtige Einstellung von einem Betreiber.

Aufgabe der vorliegenden Erfindung ist es, ein Überlastrelais sowie ein Verfahren zum Betreiben eines solchen Überlastrelais anzugeben, welches geeignet ist die Überlast schutzfunktion unabhängig von der zoht der belegten phasen durchzvführen.

Verfahrensbezogen wird die Aufgabe durch Anspruch 1, Vorrichtungsbezogen durch Anspruch 7 gelöst.

Der Erfindung liegen dabei die folgenden Überlegungen zu Grunde: Die Funktionsweise eines Überlastrelais basiert im Wesentlichen darauf, dass ein mathematisches Modell des thermischen Zustandes der abzusichernden Last berechnet wird. Bekannte Modelle berücksichtigen üblicherweise zumindest das thermische Verhalten der Last, den maximalen der Last zugeführten Strom und die Asymmetrie der an die Last angeschlossenen Phasen.

Im folgenden wird der Betrieb eines erfindungsgemäßen Überlastrelais anhand seiner Funktion für eine dreiphasige und für eine einphasige Last erläutert. Diese Erläuterungen sind allgemein für einphasige und mehrphasige Lasten gültig. Anstatt einer dreiphasigen Last kann an dem erfindungsgemäßen Überlastrelais also in gleicher Weise auch eine zweiphasige Last betrieben werden.

Mit dem oben erwähnten mathematischen Modell wird der thermische Zustand einer dreiphasigen Last berechnet. Wird nun mit diesem Modell - ohne weitere Anpassung - der thermische Zustand einer einphasigen Last berechnet, so wird aufgrund der im Einphasenbetrieb fehlenden zweiten und dritten Phase eine große Asymmetrie zwischen den Phasen festgestellt. Wird also ein Überlastrelais auf der Basis eines solchen mathematischen Modells betriebenen, so kommt es zu Fehlauslösungen.

Der vorliegenden Erfindung liegt die Erkenntnis zu Grunde, dass bei einem Überlastrelais, welches sowohl für dreiphasige als auch für einphasige Lasten geeignet sein soll, die Asymmetrieerkennung abschaltbar sein muss. So kann erfindungsgemäß der Asymmetriewert identisch Null gesetzt werden. Dem mathematischen Lastmodell wird also künstlich mitgeteilt, dass keine Asymmetrie vorhanden ist. Der restliche Algorithmus des Lastmodells bleibt unverändert, die Temperatur der an das Überlastrelais angeschlossenen Last wird weiterhin simuliert. Es besteht also nach wie vor ein thermischer Schutz, sowohl für eine einphasige als auch für eine dreiphasige Last. Zusätzlich können beim einphasigen Betrieb Fehlauslösungen vermieden werden.

Das erfindungsgemäße Verfahren zum Betreiben eines dreikanaligen Überlastrelais zum Schutz einer bis zu dreiphasigen Last weist die folgenden Schritte auf: Für jeden Kanal wird der Strom der anliegenden Phase gemessen. Der Maximalwert der drei ermittelten Ströme wird bestimmt, und als Maximalstrom bezeichnet. Dabei ist es unerheblich, ob alle drei Kanäle des Überlastrelais mit einer Phase belegt sind oder nicht. In dem Fall, in dem lediglich ein Teil der Kanäle mit einer Phase belegt sind, wird für die unbelegten Kanäle ein Strom gleich Null gemessen. Die Messung der an den Kanälen anliegenden Ströme wird in jedem Fall, d.h. unabhängig von der Belegung der Kanäle stets durchgeführt. Ein Asymmetriewert wird als Maximum der paarweisen Differenzen zwischen den Strömen bestimmt. Nach dem erfindungsgemäßen Verfahren wird nunmehr eine Betriebsart abgefragt, die angibt, ob eine Asymmetrieerkennung durchgeführt wird oder nicht. Für den Fall, dass keine Asymmetrieerkennung durchgeführt wird, wird der Asymmetriewert gleich Null gesetzt. Ein Modellwert für die Erwärmung der Last gegenüber ihrer Umgebung wird auf der Basis der Werte des Maximalstromes und des Asymmetriewertes berechnet. Die Last wird abgeschaltet, wenn der Modellwert einen vorgegebenen Schwellwert überschreitet.

Unter der Erwärmung der Last ist in diesem Zusammenhang der Wert einer Temperaturdifferenz zwischen der simulierten Temperatur der Last und deren Umgebungstemperatur zu verstehen. Der Schwellwert nimmt in diesem Zusammenhang die Funktion einer Maximaltemperatur ein. Dabei ist die Maximaltemperatur keine absolute Temperatur, sondern bezieht sich ebenfalls auf die Umgebungstemperatur. Der Schwellwert ist somit ein Wert, der maximal für die Last zugelassenen Erwärmung.

Mit dem erfindungsgemäßen Verfahren sind insbesondere die folgenden Vorteile verbunden: Das dreikanalige Überlastrelais kann sowohl an einer einphasigen Last, als auch an einer mehrphasigen Last betrieben werden. Durch Umschalten der Betriebsart ist es möglich, die für den Einphasenbetrieb nicht notwendige Asymmetrieerkennung abzuschalten. Auch in diesem Betriebszustand, der eigentlich für eine einphasige Last vorgesehen ist, ist eine ggf. doch angeschlossene dreiphasige Last thermisch abgesichert. Das mathematische Modell des thermischen Zustandes der Last wird nach wie vor berechnet, lediglich der Parameter der Asymmetrie wird nicht mehr berücksichtigt. Das erfindungsgemäße Überlastrelais weist also eine hohe Fehlbedienungssicherheit auf. Ein weiterer entscheidender Vorteil ist, dass das Überlastrelais durch einfaches Umschalten der Betriebsart wieder als ein reines Dreiphasenrelais betreiben werden kann.

Vorteilhafte Ausgestaltungen des erfindungsgemäßen Verfahrens gehen aus den im folgenden angesprochenen Unteransprüchen hervor.

Es besteht der Wunsch, bekannte dreiphasige Überlastrelais auf einfache Art und Weise um- oder aufzurüsten, um diese auch für einphasige Lasten einsetzen zu können. Nach einer Ausführungsform kann dies besonders einfach dadurch erreicht werden, dass der Asymmetriewert als Maximum der paarweisen Differenzen der Ströme berechnet wird, bevor die Betriebsart abgefragt wird. Die Programmierung des bekannten Überlastrelais kann somit nahezu unverändert bleiben. Der für die Asymmetrie der angeschlossenen Phasen berechnete Wert wird lediglich in dem Fall, in dem das Überlastrelais als Einphasenüberlastrelais betrieben wird, gleich Null gesetzt.

Soll die interne Programmierung des Überlastrelais jedoch geändert werden, so kann gemäß einer weiteren Ausführungsform der Asymmetriewert nach Abfrage der Betriebsart, als Maximum der paarweisen Differenzen der Ströme berechnet werden. Der Asymmetriewert wird nun lediglich dann berechnet, wenn dieser auch zur Berechnung des Modellwertes herangezogen werden soll. Die interne Rechenlast des Überlastrelais kann auf diese Weise gesenkt werden.

Bekannte dreiphasige Überlastrelais weisen vielfach eine Phasenausfallerkennung auf. Die Möglichkeit einer solchen Phasenausfallerkennung erhöht die Betriebssicherheit für die angeschlossene Last im Dreiphasenbetrieb. Gemäß einer weiteren vorteilhaften Ausführungsform enthält die Betriebsart zusätzlich eine Information darüber, ob eine Phasenausfallerkennung durchgeführt werden soll oder nicht. Da bei aktivierter Phasenausfallerkennung das Überlastrelais aufgrund der fehlenden zweiten und dritten Phase im Einphasenbetrieb fehlerhaft auslösen würde, ist diese Funktion schaltbar ausgelegt. Somit kann ein Verfahren zum Betrieb eines dreikanaligen Überlastrelais angegeben werden, welches so ausgestaltet ist, dass das Überlastrelais sowohl als Dreiphasenüberlastrelais mit hoher Betriebssicherheit, als auch als Einphasenüberlastrelais betrieben werden kann.

Für den Fall, dass eine Phasenausfallerkennung durchgeführt werden soll, wird der Wert für die Asymmetrie mit einem vorgegebenen Mindeststromwert verglichen. Liegt der Asymmetriewert oberhalb des Mindeststromwertes, so wird ein Phasenausfall angezeigt und die Last abgeschaltet. In dem Fall, dass das Überlastrelais als Einphasengerät betrieben werden soll, also keine Phasenausfallerkennung vorgesehen ist, wird in keinem Fall ein Phasenausfall detektiert. Bei dem Mindestwert handelt es sich um einen Grenzwert für den Wert der Asymmetrie. Liegt die Asymmetrie, bzw. deren Wert, oberhalb des Grenzwertes, in diesem Fall des Mindestwertes, so wird dies als Phasenausfall interpretiert. Wie erwähnt, wird in diesem Fall ein Phasenausfall angezeigt und die Last abgeschaltet. Alternativ können die Werte für die Ströme der einzelnen an das Überlastrelais angeschlossenen Phasen abgefragt werden. Liegt zumindest ein Wert für den Strom einer Phase unterhalb eines weiteren, ebenfalls vorgebbaren Mindestwertes, so wird ein Phasenausfall angezeigt, und entsprechend die Last abgeschaltet. Nach dem erfindungsgemäßen Verfahren wird der Wert der Asymmetrie zur Simulation der Last herangezogen. D.h. der Wert für die Asymmetrie liegt in dem Überlastrelais vor. Eine Phasenausfallerkennung anhand des Wertes für die Asymmetrie ist daher gegenüber einer Phasenausfallerkennung anhand der Stromwerte der einzelnen Phasen wesentlich einfacher.

Für den Fall, dass es sich bei der Last um einen Elektromotor handelt, wird nach einer weiteren Ausführungsform dessen Erwärmung mit einem iterativen Motormodell ermittelt. Dabei wird insbesondere ein aktueller Modellwert des Elektromotors aus der Summe verschiedener Parameter berechnet. Diese umfassen den Modellwert aus dem vorherigen Iterationsschritt, addiert um die Werte des maximalen Stromes und dem Asymmetriewert, abzüglich eines lastspezifischen Verlusttermes.

Vorrichtungsbezogen wird die Aufgabe durch ein Überlastrelais nach Anspruch 7 gelöst.

Das erfindungsgemäße Überlastrelais ist zur Durchführung des erfindungsgemäßen Verfahrens einschließlich seiner Weiterbildungen nach den von Anspruch 1 abhängigen Unteransprüchen ausgelegt. Daher sind wesentliche Merkmale des Überlastrelais bereits in Zusammenhang mit dem erfindungsgemäßen Verfahren beschrieben.

Das erfindungsgemäße Überlastrelais weist drei Kanäle auf, von denen - abhängig von der Anzahl der Phasen der zu schützenden Last - ein bis drei mit einer von einem Versorgungsnetz zu der Last führenden Phase belegbar sind. Die Phasen einer Last können beispielsweise mit einer entsprechenden Anzahl von Ein- bzw. Ausgangsklemmen an dem Überlastrelais angeschlossen sein. Das erfindungsgemäße Überlastrelais umfasst außerdem: eine Messeinheit zur Messung der an den Kanälen anliegenden Ströme, einen Betriebsartwahlschalter, dessen Stellung angibt ob eine Asymmetrieerkennung durchgeführt werden soll oder nicht, eine Verarbeitungseinheit und eine Schalteinheit zum Abschalten der Last, wenn der Modellwert einen vorgegebenen Schwellwert überschreitet. Die Verarbeitungseinheit des erfindungsgemäßen Überlastrelais dient zur Bestimmung eines Maximalstromes als Maximum der drei durch die Messeinheit gemessenen Ströme. Außerdem berechnet die Verarbeitungseinheit einen Asymmetriewert als Maximum der paarweisen Differenzen der Ströme. Der Asymmetriewert wird durch die Verarbeitungseinheit gleich Null gesetzt, für den Fall, dass die Stellung des Betriebsartwahlschalters angibt, dass keine Asymmetrieerkennung durchgeführt wird. Außerdem berechnet die Verarbeitungseinheit einen Modellwert für die Erwärmung der Last auf der Basis der Werte des Maximalstromes und des Asymmetriewertes.

Vorteilhafte Ausgestaltungen des erfindungsgemäßen Überlastrelais gehen aus den von Anspruch 7 abhängigen Ansprüchen hervor. Demgemäss kann das erfindungsgemäße Überlastrelais zusätzlich noch die folgenden Merkmale aufweisen:
Analog zu den Ausführungen im Zusammenhang mit dem erfindungsgemäßen Verfahren kann die Verarbeitungseinheit wahlweise vor oder nach Abfragen des Betriebsartwahlschalters den Asymmetriewert als Maximum der paarweisen Differenzen der Ströme berechnen. Führt die Verarbeitungseinheit diese Berechnung nach Abfragen des Betriebsartwahlschalters durch, so wird die Berechnung nur in dem Falle angestellt, in dem der Betriebsartwahlschalter angibt, dass eine Asymmetrieerkennung durchgeführt wird.

Nach einer Ausführungsform weist das Überlastrelais einen weiteren Betriebsartwahlschalter auf, der angibt ob eine Phasenausfallerkennung durchgeführt wird oder nicht. Für den Fall, dass die Stellung des weiteren Betriebsartwahlschalters eine Phasenausfallerkennung vorsieht, führt die Verarbeitungseinheit die folgenden Schritte aus: Der Wert der Asymmetrie wird mit einem vorgegebenen Mindestwert verglichen, und wenn der Asymmetriewert einer Phase oberhalb des Mindestwertes liegt, so wird die Last mittels der Schalteinheit abgeschaltet. In dem Fall, in dem die Stellung des Betriebsartwahlschalters keine Phasenausfallerkennung vorsieht, kommt es nie zu einer Auslösung wegen eines Phasenausfalls.

Gemäß einer weiteren vorteilhaften Ausführungsform kann zumindest einer der Betriebsartwahlschalter ein Dip-Schalter sein. Dip-Schalter sind preisgünstig, klein und somit gut in ein Überplastrelais integrierbar.

Weitere vorteilhafte Ausgestaltungen des erfindungsgemäßen Verfahrens sowie des erfindungsgemäßen Überlastrelais gehen aus den vorstehend nicht angesprochenen Unteransprüchen, sowie insbesondere aus der nachfolgend erläuterten Zeichnung hervor.

Dabei zeigt deren
- Fig. 1: ein Überlastrelais und
- Fig. 2 bis 4: Verfahren zum Betreiben eines solchen Über- lastrelais.

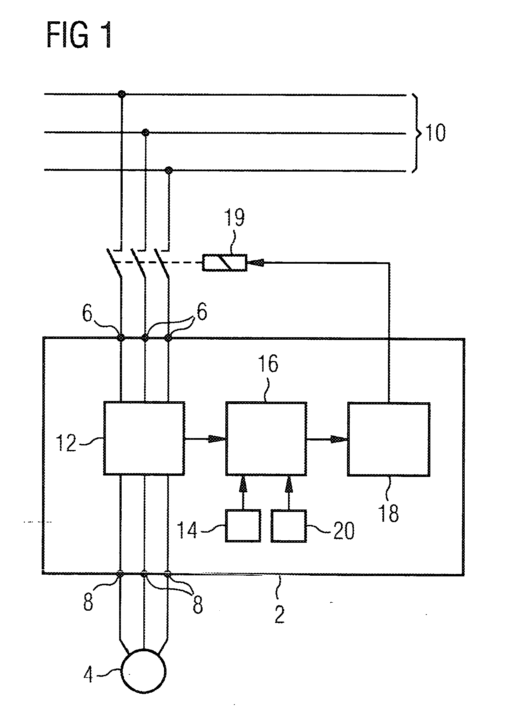

Fig. 1 zeigt ein dreikanaliges Überlastrelais 2, welches zum Schutz einer Last 4 zwischen diese und die Phasen eines Versorgungsnetzes 10 geschaltet ist. Das Ausführungsbeispiel zeigt eine dreiphasige Last 4, beispielsweise einem Drehstrommotor, welche über die jeweils drei Eingangsklemmen 6 und drei Ausgangsklemmen 8 des Überlastrelais 2 mit den entsprechenden Phasen des Versorgungsnetzes 10 verbunden ist. Dabei ist jede der Eingangs- bzw. Ausgangsklemmen 6,8 mit jeweils einer Phase belegt. Das Überlastrelais 2 weist außerdem eine Messeinheit 12, eine Verarbeitungseinheit 16 und eine Schalteinheit 18 auf. Die Schalteinheit 18 steuert ein Schütz 19, mit welchem die Last 4 abgeschaltet werden kann. Das Überlastrelais 2 weist vorzugsweise auf seiner Vorderseite zwei Betriebsartwahlschalter 14, 20 auf. Bei diesen Betriebswartwahlschaltern 14, 20 handelt es sich vorzugsweise sogenannte Dip-Schalter.

Die Messeinheit 12 dient zur Messung der an den Eingangsklemmen 6 anliegenden Ströme A₁, A₂, A₃. Je nachdem wie viele Phasen an den Eingangsklemmen 6 des Überlastrelais 2 angeklemmt sind, wird eine oder mehrere Ströme identisch Null sein. Für den Fall, in dem, wie in Fig. 1 dargestellt, alle drei Eingangsklemmen belegt sind, werden die entsprechenden Ströme A₁, A₂, A₃ der zugehörigen Phase des Versorgungsnetzes 10 gemessen. Ist lediglich eine der Eingangsklemmen 6 belegt, so wird der Strom der anliegenden Phase gemessen, die übrigen Werte liegen bei Null.

Der Betriebsartwahlschalter 14 gibt an, ob eine Asymmetrieerkennung von dem Überlastrelais 2 durchgeführt werden soll oder nicht. Der weitere Betriebsartwahlschalter 20 gibt an, ob eine Phasenausfallerkennung durchgeführt werden soll oder nicht.

Die Verarbeitungseinheit 16 dient zur Bestimmung eines Maximalstromes A_{MAX} als Maximum der drei Ströme A₁, A₂, A₃, sowie zur Bestimmung eines Asymmetriewertes P_{MAX} als Maximum der paarweisen Differenzen P₁₂, P₂₃, P₃₁ der Ströme A₁, A₂, A₃. Die Verarbeitungseinheit 16 setzt den Asymmetriewert P_{MAX} in dem Fall identisch Null, indem die Stellung des Betriebsartwahlschalters 14 angibt, dass keine Asymmetrieerkennung durchgeführt werden soll. Die Verarbeitungseinheit 16 berechnet außerdem einen Modellwert MM für die Erwärmung der Last 4. Dieser Modellwert MM wird auf der Basis der Werte der Maximalstrom A_{MAX} und des Asymmetriewertes P_{MAX} bestimmt. Wie bereits erwähnt, handelt es sich bei dem Modellwert MM für die Erwärmung der Last 4 um den Wert einer Temperaturdifferenz zwischen der simulierten Temperatur der Last 4 und der Umgebungstemperatur der Last 4. Die Schalteinheit 18 dient zum Abschalten der Last 4, wenn der Modellwert MM einen vorgegebenen Schwellwert MM_{MAX} überschreitet. Der Schwellwert MM_{MAX} übernimmt dabei die Funktion einer Maximaltemperatur, wobei sich dieser wiederum auf die Umgebungstemperatur der Last 4 bezieht. Die tatsächlich für die Last 4 zulässige maximale Temperatur ergibt sich also als Summe aus dem Wert für MM_{MAX} und der Umgebungstemperatur der Last 4. Die elektrische Trennung der Last 4 von dem Versorgungsnetz 10 erfolgt mit Hilfe des Schütz 19.

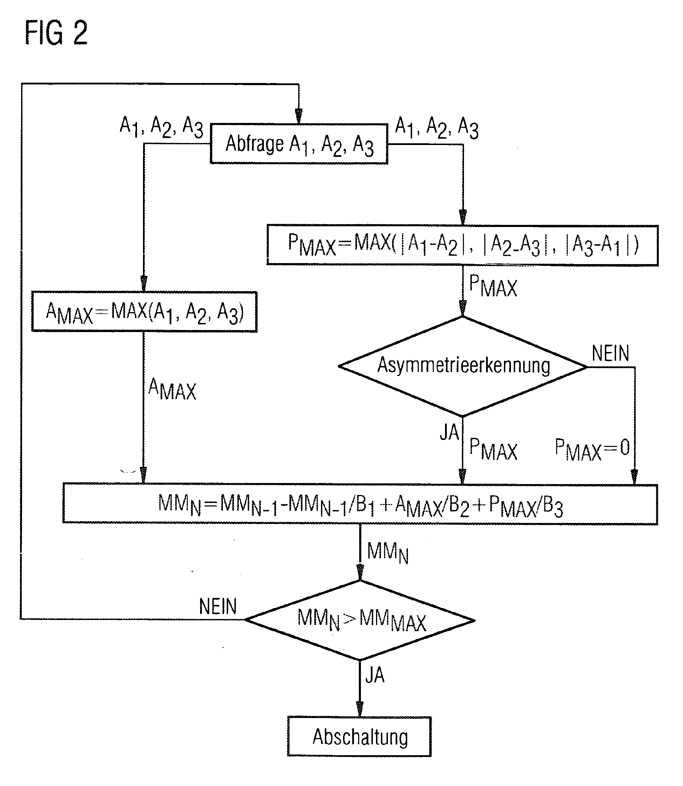

Mögliche Funktionsweisen des in Fig. 1 gezeigten Überlastrelais 2 werden anhand der in den Fig. 2 bis 4 gezeigten Ablaufdiagramme nunmehr erläutert.

Nach dem in Fig. 2 gezeigten Ausführungsbeispiel wird in Schritt 102 jeweils der Wert eines anliegenden Stromes A₁, A₂, A₃ abgefragt bzw. gemessen. Die Werte der Ströme A₁, A₂, A₃ werden nun an den ersten und zweiten Pfad des Ablaufdiagramms übergeben. Dabei umfasst der erste Pfad den Schritt 104, der zweite Pfad umfasst die Schritte 108 und 110. Die Pfade des Ablaufdiagramms können unabhängig voneinander, insbesondere gleichzeitig ablaufen.

In Schritt 104 wird das Maximum der Ströme A₁, A₂, A₃ als A_{MAX} bestimmt. Der Wert von A_{MAX} geht in das in Schritt 106 berechnete Lastmodell ein. Vorzugsweise kann es sich bei der Last um einen Motor handeln, weswegen im Folgenden anstatt allgemein von einem Lastmodell auch von einem Motormodell gesprochen werden soll.

Dem zweiten Pfad folgend wird in Schritt 108 ein Asymmetriewert P_{MAX} berechnet. Dieser ergibt sich aus dem Maximum der paarweisen Differenzen der Stromwerte A₁, A₂, A₃. Es werden dabei jeweils die Beträge der zwischen den einzelnen Strömen herrschenden Differenzen betrachtet. In Schritt 110 wird abgefragt, ob eine Asymmetrieerkennung durchgeführt werden soll oder nicht. Dies geschieht durch Abfrage des bereits im Zusammenhang mit Fig. 1 erwähnten Betriebsartwahlschalters 14. Für den Fall, dass keine Asymmetrieerkennung durchgeführt werden soll, wird der Wert von P_{MAX} identisch Null an das Motormodell im Schritt 106 übergeben. Für den Fall, dass eine Asymmetrieerkennung durchgeführt werden soll, wird der in Schritt 108 ermittelte Wert von P_{MAX} an das Motormodell übergeben.

In Schritt 106 wird iterativ ein Modellwert MM eines Motormodells berechnet. Dabei ergibt sich der im aktuellen Iterationsschritt berechnete Modellwert MM_{N}, der mit der Erwärmung der angeschlossenen Last 4 zu identifizieren ist oder gegebenenfalls über eine weitere Funktion mit diesen korreliert, wie folgt: Ausgehend von dem Modellwert MM_{N-1} im letzten Iterationsschritt, abzüglich eines motorenspezifischen Abkühltherms MM_{N-1} / B1, wird dem Motormodellwert der Wert von A_{MAX} / B2 und der Asymmetriewert P_{MAX} / B3 hinzugezählt. Der Wert des Abkühltherms MM_{N-1}, derjenige Wert von A_{MAX} und der Asymmetriewert P_{MAX} werden mit Bruchteilen B1, B2, B3 berücksichtigt.

Der auf diese Weise berechnete Motormodellwert MM_{N} wird an den Schritt 112 weitergeleitet. In diesem wird geprüft, ob der für die Last 4 berechnete Modellwert MM_{N} (der im Wesentlichen der Erwärmung der Last 4 entspricht) einen maximalen Schwellwert MM_{MAX} überschreitet. Ist dies der Fall, so wird die Last 4 abgeschaltet. Ist dies nicht der Fall, so beginnt das Verfahren erneut mit der Abfrage der Ströme A₁, A₂, A₃ in Schritt 102.

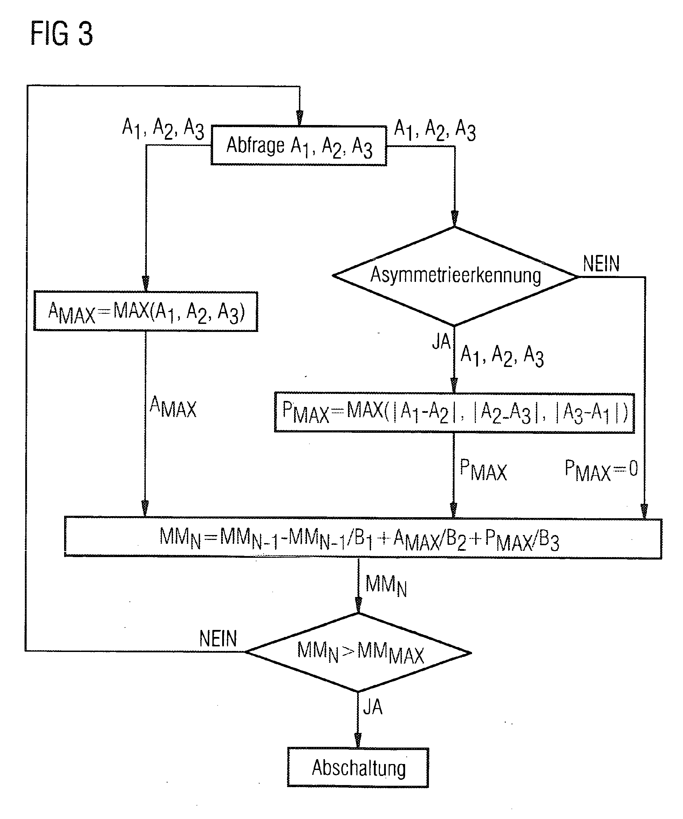

Fig. 3 zeigt ein weiteres Verfahren nach einem Ausführungsbeispiel, wobei dieses sich von dem im Zusammenhang mit Fig. 2 erläuterten Verfahren lediglich dadurch unterscheiden, dass in dem zweiten Pfad der Schritt 110 der Asymmetrieerkennung und der Schritt 108 der Ermittlung des Asymmetriewertes P_{MAX} miteinander vertauscht sind.

Nach dem in Fig. 3 gezeigten Ausführungsbeispiel kann somit eine auf den ersten Blick in Fig. 2 unnötige Berechnung des Asymmetriewertes P_{MAX} vermieden werden. Wohl ist das Verfahren nach dem in Fig. 3 gezeigten Ausführungsbeispiel von der Rechenleistung her betrachtet effektiver als das in Fig. 2 gezeigte Verfahren. Jedoch kann das Verfahren nach Fig. 2 mit sehr geringem technischen Aufwand in bereits bestehende Algorithmen eines bekannten dreikanaligen Überlastrelais integriert werden.

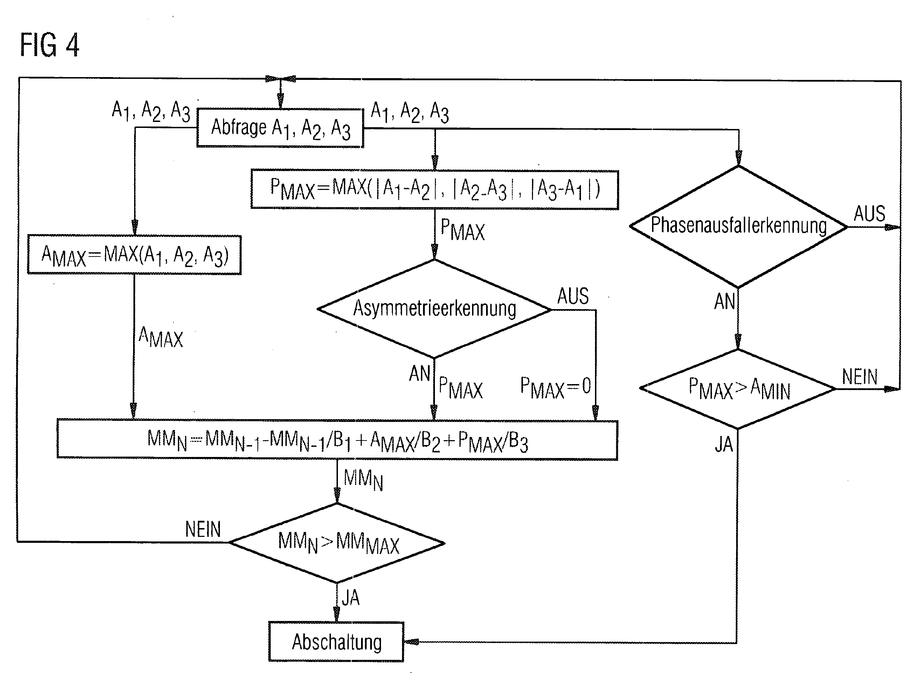

Fig. 4 zeigt ein weiteres Verfahren zum Betreiben eines dreikanaligen Überlastrelais 2 nach einem Ausführungsbeispiel. Dem dargestellten Ablaufdiagramm ist zu entnehmen, dass das in Fig. 4 dargestellte Verfahren ein gegenüber dem bereits in Zusammenhang mit Fig. 2 erläuterten Verfahren erweitertes Verfahren ist. So sind die Schritte 102 bis 114 des ersten und zweiten Pfades unverändert, und bedürfen daher an dieser Stelle keiner näheren Erläuterung. Zusätzlich zu den bereits im Zusammenhang mit Fig. 2 erläuterten Schritten wird ein dritter Pfad eingeführt, der die Schritte 116 und 118 umfasst. Der in Schritt 108 gemessene Wert für die Asymmetrie P_{MAX} wird dem Schritt 116 zugeführt. In Schritt 116 wird abgefragt, ob eine Phasenausfallerkennung durchgeführt werden soll oder nicht. Dies geschieht durch Abfrage des weiteren Betriebsartwahlschalters 20. Soll keine Phasenausfallerkennung durchgeführt werden, so führt dieser Ast des Ablaufdiagrammes direkt zurück zum Ausgangspunkt. Soll hingegen eine Phasenausfallerkennung statt finden, so wird überprüft, ob der Wert für die Asymmetrie P_{MAX} größer ist als ein vorgegebener Mindestwert A_{MIN}. Der Asymmetriewert P_{MAX} wird also nicht nur als Maß für die Asymmetrie, sondern auch als Maß für die Erkennung eines Phasenausfalls herangezogen. Alternativ zu einer Phasenausfallerkennung anhand des Wertes der Asymmetrie P_{MAX} können die in Schritt 102 abgefragten Werte für die Ströme A₁, A₂, A₃ zur Phasenausfallerkennung in Schritt 118 herangezogen werden. Bei einer solchen alternativen Ausgestaltung des Verfahrens wird jeder der Werte A₁, A₂, A₃ mit einem vorgegebenen Mindeststromwert verglichen. Sinkt der Strom einer einzelnen Phase unter den Mindestwert, so erfolgt eine Abschaltung der Last 4 aufgrund eines Phasenausfalls. Ist dies nicht der Fall, so kehrt der beschriebene Pfad wiederum zurück zum Ausgangspunkt an Schritt 102. Wird hingegen die Abfrage in Schritt 118 bejaht, so wird ein Phasenausfall erkannt, was zu einer Abschaltung der Last 4 in Schritt 114 führt.

## Patentansprüche

1. Verfahren zum Betreiben eines dreikanaligen Überlastrelais (2) zum Schutz einer bis zu dreiphasigen Last (4), wobei ein bis drei Kanäle mit jeweils einer von einem Versorgungsnetz (10) zu der Last (4) führende Phase belegt sind, bei dem
- für jeden Kanal der Strom (A₁, A₂, A₃) der anliegenden Phase gemessen wird,
- ein Maximalstrom (A_{MAX}) als Maximum der drei Ströme (A₁, A₂, A₃) und ein Asymmetriewert (P_{MAX}) als Maximum der paarweisen Differenzen (P₁₂, P₂₃, P₃₁) der Ströme (A₁, A₂, A₃) bestimmt wird,
- eine Betriebsart abgefragt wird, die angibt ob eine Asymmetrieerkennung durchgeführt wird, und für den Fall, dass keine Asymmetrieerkennung durchgeführt wird, der Asymmetriewert (P_{MAX}) gleich Null gesetzt wird,
- ein Modellwert (MM) für die Erwärmung der Last (4) gegenüber ihrer Umgebung auf der Basis der Werte des Maximalstroms (A_{MAX}) und des Asymmetriewertes (P_{MAX}) berechnet wird und
- die Last (4) abgeschaltet wird, wenn der Modellwert (MM) einen vorgegebenen Schwellwert (MM_{MAX}) überschreitet.

2. Verfahren nach Anspruch 1, **dadurch gekennzeichnet, dass** der Asymmetriewert (P_{MAX}) bestimmt wird, bevor die Betriebsart abgefragt wird.

3. Verfahren nach Anspruch 1, **dadurch gekennzeichnet, dass** für den Fall, dass eine Asymmetrieerkennung durchgeführt wird, der Asymmetriewert (P_{MAX}) nach Abfrage der Betriebsart bestimmt wird.

4. Verfahren nach einem der Ansprüche 1 bis 3, **dadurch gekennzeichnet, dass** die Betriebsart zusätzlich angibt, ob eine Phasenausfallerkennung durchgeführt wird und
a) für den Fall, dass keine Phasenausfallerkennung durchgeführt wird, kein Phasenverlust angezeigt und die Last (4) nicht abgeschaltet wird und
b) für den Fall, dass eine Phasenausfallerkennung durchgeführt wird,
- der Asymmetriewert (P_{MAX}) mit einem vorgegebenen Mindestwert (A_{MIN}) verglichen wird, und
- wenn der Asymmetriewert (P_{MAX}) oberhalb des Mindestwertes (A_{MIN}) liegt, ein Phasenausfall angezeigt und die Last (4) abgeschaltet wird.

5. Verfahren nach einem der vorhergehenden Ansprüche, **dadurch gekennzeichnet, dass** die Last (4) ein Elektromotor ist, dessen Erwärmung mit einem iterativen Motormodell ermittelt wird.

6. Verfahren nach Anspruch 5, **dadurch gekennzeichnet, dass** ein aktueller Modellwert (MM_{N}) des Elektromotors aus der Summe aus dessen Modellwert (MM_{N-1}) im vorherigen Iterationsschritt und den Werten für den maximalen Strom (A_{MAX}) und den Asymmetriewert (P_{MAX}), abzüglich eines lastspezifischen Verlusttermes berechnet wird.

7. Überlastrelais (2) zur Durchführung eines Verfahrens nach einem der vorhergehenden Ansprüche mit drei Kanälen zum Schutz einer bis zu dreiphasigen Last (4), wobei ein bis drei Kanäle jeweils mit einer von einem Versorgungsnetz (10) zu der Last (4) führenden Phase belegbar sind, umfasst:
- eine Messeinheit (12) zur Messung der an den drei Kanälen anliegenden Ströme (A₁, A₂, A₃),
- einen Betriebsartwahlschalter (14), dessen Stellung angibt ob eine Asymmetrieerkennung durchgeführt werden soll,
- eine Verarbeitungseinheit (16) zur Bestimmung eines Maximalstromes (A_{MAX}) als Maximum der drei Ströme (A₁, A₂, A₃) und eines Asymmetriewertes (P_{MAX}) als Maximum der paarweisen Differenzen (P₁₂, P₂₃, P₃₁) der Ströme (A₁, A₂, A₃), zum Setzen des Asymmetriewertes (P_{MAX}) gleich Null, für den Fall, dass die Stellung des Betriebsartwahlschalters (14) angibt, dass keine Asymmetrieerkennung durchgeführt wird, und zur Berechnung eines Modellwertes (MM) für die Erwärmung der Last (4) auf der Basis der Werte des Maximalstromes (A_{MAX}) und des Asymmetriewertes (P_{MAX})
- einer Schalteinheit (18) zum Abschalten der Last (4), wenn der Modellwert (MM) eine vorgegebene Schwellwert (MM _{MAX}) überschreitet.

8. Überlastrelais (2) nach Anspruch 7, **dadurch gekennzeichnet, dass** die Verarbeitungseinheit (16) den Asymmetriewert (P_{MAX}) berechnet bevor der Betriebsartwahlschalter (14) abgefragt wird.

9. Überlastrelais (2) nach Anspruch 7, **dadurch gekennzeichnet, dass** die Verarbeitungseinheit (16), nach Abfrage des Betriebsartwahlschalters (14), für den Fall, dass dessen Stellung angibt, dass eine Asymmetrieerkennung durchgeführt wird, den Asymmetriewert (P_{MAX}) berechnet.

10. Überlastrelais (2) nach einem der Ansprüche 7 bis 9, **gekennzeichnet durch** einen weiteren Betriebsartwahlschalter (20), der angibt ob eine Phasenausfallerkennung durchgeführt wird, und
a) für den Fall, dass die Stellung des weiteren Betriebsartwahlschalters (20) keine Phasenausfallerkennung vorsieht, der Schalteinheit (18) kein Phasenverlust angezeigt wird und
b) für den Fall, dass die Stellung des weiteren Betriebsartwahlschalters (20) eine Phasenausfallerkennung vorsieht,
- die Verarbeitungseinheit (16) den Asymmetriewert (P_{MAX}) mit einem vorgegebenen Mindestwert (A_{MIN}) vergleicht und wenn der Asymmetriewert (P_{MAX}) oberhalb des Mindestwertes (A_{MIN}) liegt,
- der Schalteinheit (18) ein Phasenausfall angezeigt wird, und eine Abschaltung der Last (4) veranlasst wird.

11. Überlastrelais nach einem der Ansprüche 7 bis 10, **dadurch gekennzeichnet, dass** zumindest einer der Betriebsartwahlschalter (14, 20) ein Dip-Schalter ist.

## Claims

1. Method for operating a three-channel overload relay (2) for protection of a load (4), having up to three phases, wherein one to three channels is or are each occupied by one phase which leads from a supply system (10) to the load (4), in which
- the current (A₁, A₂, A₃) in the applied phase is measured for each channel,
- a maximum current (A_{MAX}) is determined as the maximum of the three currents (A₁, A₂, A₃) and an unbalance value (P_{MAX}) is determined as the maximum of the differences (P₁₂, P₂₃, P₃₁) between the pairs of currents (A₁, A₂, A₃),
- an operating mode is checked which indicates whether unbalance identification is being carried out and, if no unbalance identification is being carried out, the unbalance value (P_{MAX}) is set to zero,
- a model value (MM) for the heating of the load (4) with respect to its environment is calculated on the basis of the values of the maximum current (A_{MAX}) and the unbalance value (P_{MAX}) and
- the load (4) is disconnected if the model value (MM) exceeds a predetermined threshold value (MM_{MAX}).

2. Method according to claim 1, **characterized in that** the unbalance value (P_{MAX}) is determined before the operating mode is checked.

3. Method according to Claim 1, **characterized in that** in the situation in which an unbalance identification is being carried out, the unbalance value (P_{MAX}) is determined after checking the operating mode.

4. Method according to one of Claims 1 to 3, **characterized in that** the operating mode additionally indicates whether phase failure identification is being carried out and
a) in the situation where no phase failure identification is being carried out, no phase loss is indicated and the load (4) is not disconnected, and
b) in the situation where phase failure identification is being carried out,
- the unbalance value (P_{MAX}) is compared with a predetermined minimum value (A_{MIN}) and
- if the unbalance value (P_{MAX}) is above the minimum value (A_{MIN}) a phase failure is indicated and the load (4) is disconnected.

5. Method according to one of the preceding claims, **characterized in that** the load (4) is an electric motor whose heating is determined using an iterative motor model.

6. Method according to Claim 5, **characterized in that** an instantaneous model value (MM_{N}) of the electric motor is calculated from the sum of its model value (MM_{N-1}) in the previous iteration step and the values for the maximum current (A_{MAX}) and the unbalance value (P_{MAX}), less a load-specific loss term.

7. Overload relay (2) for carrying out a method according to one of the preceding claims having three channels for protection of a load (4) having one to three phases wherein one to three channels can each be occupied by one phase which leads from a supply system (10) to the load (4), comprises:
- a measurement unit (12) for measurement of the currents (A₁, A₂, A₃) applied to the three channels,
- an operating mode selection switch (14), whose position indicates whether an unbalance identification should be carried out,
- a processing unit (16) for determination of a maximum current (A_{MAX}) as the maximum of the three currents (A₁, A₂, A₃), and for determination of an unbalance value (P_{MAX}) as the maximum of the differences (P₁₂, P₂₃, P₃₁) between the pairs of the currents (A₁, A₂, A₃), in order to set the unbalance value (P_{MAX}) to zero, in the situation where the position of the operating mode selection switch (14) indicates that no unbalance identification is being carried out, and for calculation of a model value (MM) for the heating of the load (4) on the basis of the values of the maximum current (A_{MAX}) and the unbalance value (P_{MAX})
- a switching unit (18) for disconnecting the load (4) if the model value (MM) exceeds a predetermined threshold value (MM_{MAX}).

8. Overload relay (2) according to Claim 7, **characterized in that** the processing unit (16) calculates the unbalance value (P_{MAX}) before the operating mode selection switch (14) is checked.

9. Overload relay (2) according to Claim 7, **characterized in that** the processing unit (16) calculates the unbalance value (P_{MAX}) after checking the operating mode selection switch (14) in the situation where the position of this switch (14) indicates that an unbalance identification is being carried out.

10. Overload relay (2) according to one of Claims 7 to 9, **characterized by** a further operating mode selection switch (20) which indicates whether phase failure identification is being carried out, and
a) in the situation where the position of the further operating mode selection switch (20) does not provide any phase failure identification, the switching unit (18) does not indicate any phase loss, and
b) in the situation where the position of the further operating selection switch (20) provides phase failure identification,
- the processing unit (16) compares the unbalance value (P_{MAX}) with a predetermined minimum value (A_{MIN}) and, if the unbalance value (P_{MAX}) is above the minimum value (A_{MIN}),
- a phase failure is indicated to the switching unit (18) and the load (4) is disconnected.

11. Overload relay according to one of Claims 7 to 10, **characterized in that** at least one of the operating mode selection switches (14, 20) is a dip switch.

## Revendications

1. Procédé pour faire fonctionner un relais ( 2 ) de surcharge à trois canaux pour la protection d'une charge ( 4 ) ayant de une phase à trois phases, dans lequel un à trois canaux sont occupés par respectivement une phase menant d'un réseau ( 10 ) d'alimentation à la charge ( 4 ), dans lequel
- on mesure pour chaque canal le courant ( A₁, A₂, A₃ ) de la phase appliquée,
- on détermine un courant ( A_{MAX} ) maximum comme maximum des trois courants ( A₁, A₂, A₃ ) et une valeur ( P_{MAX} ) de dissymétrie comme maximum des différences ( P₁₂, P₂₃, P₃₁ ) paire par paire des courants ( A₁, A₂, A₃ ),
- on appelle un type de fonctionnement, qui indique si une détection de dissymétrie est effectuée et, dans le cas où une détection de dissymétrie n'est pas effectuée, on met la valeur ( P_{MAX} ) égale à zéro,
- on calcule une valeur ( MM ) de modèle pour l'échauffement de la charge ( 4 ) par rapport à ce qui l'entoure sur la base des valeurs du courant ( A_{MAX} ) maximum et de la valeur ( P_{MAX} ) de dissymétrie et
- on met la charge ( 4 ) hors circuit si la valeur ( MM ) de modèle dépasse une valeur ( MM_{MAX} ) de seuil prescrite.

2. Procédé suivant la revendication 1, **caractérisé en ce qu'**on détermine la valeur ( P_{MAX} ) de dissymétrie avant d'appeler le type de fonctionnement.

3. Procédé suivant la revendication 1, **caractérisé en ce que**, dans le cas où une détection de dissymétrie est effectuée, on détermine la valeur ( P_{MAX} ) de dissymétrie après avoir appelé le type de fonctionnement.

4. Procédé suivant l'une des revendications 1 à 3, **caractérisé en ce que** le type de fonctionnement indique supplémentairement si une détection de défaut de phase est effectuée et
a) dans le cas où une détection de défaut de phase n'est pas effectuée, une perte de phase n'est pas indiquée et la charge ( 4 ) n'est pas mise hors circuit et
b) dans le cas où une détection de défaut de phase est effectuée,
- on compare la valeur ( P_{MAX} ) de dissymétrie à une valeur ( A_{MIN} ) minimum prescrite, et
- si la valeur ( P_{MAX} ) de dissymétrie est supérieure à la valeur ( A_{MIN} ) minimum, une défaillance de phase est indiquée et la charge ( 4 ) est mise hors circuit.

5. Procédé suivant l'une des revendications précédentes, **caractérisé en ce que** la charge est un moteur électrique, dont l'échauffement est déterminé par un modèle de moteur itératif.

6. Procédé suivant la revendication 5, **caractérisé en ce qu'**on calcule une valeur ( MM_{N} ) de modèle instantanée du moteur électrique composée de la somme de sa valeur ( MM_{N-1} ) de modèle dans le stade d'itération précédent et des valeurs du courant ( A_{MAX} ) maximum et de la valeur ( P_{MAX} ) de dissymétrie, diminuée d'un terme de perte spécifique à la charge.

7. Relais ( 2 ) de surcharge pour effectuer un procédé suivant l'une des revendications précédentes, comprenant trois canaux pour la protection d'une charge ( 4 ) ayant de une à trois phases, d'un à trois canaux pouvant être occupés respectivement par une phase menant d'un réseau d'alimentation à la charge ( 4 ), qui comprend :
- une unité ( 12 ) de mesure, pour la mesure des courants ( A₁, A₂, A₃ ) s'appliquant aux trois canaux,
- un commutateur ( 14 ) de choix de type de fonctionnement, dont la position indique s'il faut effectuer une détection de dissymétrie,
- une unité ( 16 ) de traitement, pour déterminer un courant ( A_{MAX} ) maximum comme maximum des trois courants ( A₁, A₂, A₃ ) et une valeur ( P_{MAX} ) de dissymétrie comme maximum des différences ( P₁₂, P₂₃, P₃₁ ) paire par paire des courants ( A₁, A₂, A₃ ), pour mettre la valeur ( P_{MAX} ) de dissymétrie égale à zéro, dans le cas où la position du commutateur ( 14 ) de choix du type de fonctionnement indique qu'une détection de dissymétrie n'est pas effectuée, et pour le calcul d'une valeur ( MM ) de modèle de l'échauffement de la charge ( 4 ) sur la base des valeurs du courant ( A_{MAX} ) maximum et de la valeur ( P_{MAX} ) de dissymétrie,
- une unité ( 18 ) de commutation, pour mettre la charge ( 4 ) hors circuit, si la valeur ( MM ) de modèle dépasse une valeur ( MM_{MAX} ) de seuil prescrite.

8. Relais ( 2 ) de surcharge suivant la revendication 7, **caractérisé en ce que** l'unité ( 16 ) de traitement calcule la valeur ( P_{MAX} ) de dissymétrie avant que le commutateur ( 14 ) de choix du type de fonctionnement soit appelé.

9. Relais ( 2 ) de surcharge suivant la revendication 7, **caractérisé en ce que** l'unité ( 16 ) de traitement calcule la valeur ( P_{MAX} ) de dissymétrie après avoir appelé le commutateur ( 14 ) de choix du type de fonctionnement, dans le cas où sa position indique qu'une détection de dissymétrie est effectuée.

10. Relais ( 2 ) de surcharge suivant l'une des revendications 7 à 9, **caractérisé par** un autre commutateur ( 20 ) de choix de type de fonctionnement qui indique si une détection de défaut de phase est effectuée, et
a) dans le cas où la position de l'autre commutateur ( 20 ) de choix du type de fonctionnement ne prévoit pas de détection de défaut de phase, une perte de phase n'est pas indiquée à l'unité ( 18 ) de commutation et
b) dans le cas où la position de l'autre commutateur ( 20 ) de choix du type de fonctionnement prévoit une détection de défaut de phase,
- l'unité ( 16 ) de traitement compare la valeur ( P_{MAX} ) de dissymétrie à une valeur ( A_{MIN} ) minimum prescrite et si la valeur ( P_{MAX} ) de dissymétrie est supérieure à la valeur ( A_{MIN} ) minimum,
- un défaut de phase est indiqué à l'unité ( 18 ) de commutation et une mise hors circuit de la charge ( 4 ) est provoquée.

11. Relais ( 2 ) de surcharge suivant l'une des revendications 7 à 10, **caractérisé en ce qu'**au moins l'un des commutateurs ( 14, 20 ) de choix de type de fonctionnement est un commutateur Dip.
